# EUROPÄISCHE PATENTANMELDUNG

(11) **EP 4 697 246 A1**
(43) Veröffentlichungstag der Anmeldung: **18.02.2026**
(21) Anmeldenummer: 25196196.7
(22) Anmeldetag: 15.08.2025
(51) Int. Cl.: G06Q 10/04, G06Q 10/083, G06Q 50/60

(54) **VERFAHREN UND VORRICHTUNG FÜR DIE EFFIZIENTE ZUSTELLUNG VON SENDUNGEN MIT UNTERSCHIEDLICHER GRÖSSE IN EINE FACHANLAGE**

(30) Priorität: 16.08.2024 DE 102024123411
(71) Anmelder: Deutsche Post AG, 53113 Bonn (DE)
(72) Erfinder: SALOMON, Jörg, Dr., 53113 Bonn (DE)
(74) Vertreter: Cohausz & Florack

(57) **Zusammenfassung**

Offenbart wird u.a. ein Verfahren ausgeführt durch eine erste Vorrichtung oder durch eine Komponente davon, wobei die erste Vorrichtung eine Vielzahl von Registerfächern umfasst, das Verfahren umfassend: Erhalten einer Sendung, insbesondere einer Briefsendung; Prüfen, ob die Sendung in ein Registerfach der Vielzahl von Registerfächern aufgenommen werden soll; Aufnehmen der Sendung in ein Registerfach, falls die Prüfung ergeben hat, dass die Sendung in ein Registerfach der Vielzahl von Registerfächern aufgenommen werden soll; und Ablehnen der Sendung, falls die Prüfung ergeben hat, dass die Sendung nicht in ein Registerfach der Vielzahl von Registerfächern aufgenommen werden soll. Darüber hinaus werden entsprechende Vorrichtungen, Systeme und Computerprogramme zur jeweiligen Ausführung und/oder Steuerung des offenbarten Verfahrens offenbart.

## Beschreibung

### Gebiet

Beispielhafte Ausführungsformen der Erfindung betreffen Verfahren, Vorrichtungen, Systeme und Computerprogramme zum Zustellen von Sendungen, insbesondere Briefsendungen in Registerfächer einer Vorrichtung, wobei die Vorrichtung insbesondere eine Fachanlage ist, welche auch für die Aufnahme von Paketsendungen geeignet ist.

### Hintergrund

Die Zustellung von Briefsendungen erfolgt üblicherweise vor Ort an der Empfängeradresse in einen Briefkasten. Alternativ kann die Zustellung in ein Postfach erfolgen. Ein Postfach ist ein abschließbares, vor fremden Zugriff gesichertes Fach, welcher üblicherweise durch den Empfänger von einem Zustellunternehmen oder dessen Partnern für bestimmte Zeit gemietet werden kann und dem Empfänger dann für diese Zeit fest zugeordnet ist Postfächer befinden sich üblicherweise in Postfachanlagen in den Filialen der Zustellunternehmen oder deren Partner. Der Empfänger hat beispielsweise durch einen Schlüssel oder einen Zugangscode Zugriff auf das von ihm gemietete Postfach. Postfächer bieten sich beispielsweise für den Empfang von Geschäftspost an, oder für Empfänger, die selten Gelegenheit haben, einen Briefkasten zu leeren.

Fachanlagen finden beispielsweise in Form von Schließfach- oder Paketfachanlagen mannigfaltig Anwendung. Ein Beispiel für eine Paketfachanlage ist die Packstation der Anmelderin, in die sich ein Empfänger Sendungen liefern lassen kann. Die Sendung wird vom Zusteller in ein Fach einer in der Nähe des Empfängers befindlichen und/oder von dem Empfänger zuvor festgelegten Packstation eingelegt, das Fach verschlossen und der Empfänger entsprechend benachrichtigt.

### Zusammenfassung einiger beispielhafter Ausführungsformen der Erfindung

Fachanlagen sind bisher im Wesentlichen für die Zustellung und/oder Abholung von Paketsendungen bestimmt. Um auch den Empfängern von Postfachsendungen (Postfachnutzern) die Vorteile einer Fachanlage, wie beispielsweise einen hinsichtlich der Filialöffnungszeiten unbegrenzten Zugang, eine Vielzahl von Abholstandorten und/oder die gleichzeitige Abholung von Brief- und Paketsendungen zu ermöglichen, ist die Möglichkeit einer Zustellung von Postfachsendungen in Fachanlagen wünschenswert Dabei ist insbesondere eine effiziente Nutzung des vorhandenen Raumes wünschenswert Eine Zustellung einzelner Briefsendungen in die Fächer der Fachanlagen, die für Paketsendungen ausgelegt sind, würde die Kapazität der Fachanlage deutlich verringern und ist daher nicht erstrebenswert. Zudem variiert die Anzahl an Briefsendungen bei einem jeweiligen Postfachnutzer und auch zwischen verschiedenen Postfachnutzern häufig stark, sodass eine dynamische Zustellmöglichkeit wünschenswert ist, bei der nicht für jeden Postfachnutzer zu jeder Zeit ein individuelles Postfach zur Verfügung stehen muss. Darüber hinaus ist es erstrebenswert, auch Personen, die kein Postfach mieten, die Möglichkeit zu geben, sich Briefsendungen außerhalb ihrer Empfängeradresse zustellen zu lassen.

Die vorliegende Erfindung hat sich die Aufgabe gestellt, einen oder mehrere der oben beschriebenen Nachteile zu überwinden und/oder einen oder mehrere der oben beschriebenen Vorteile zu erhalten und/oder eine oder mehrere der oben beschriebenen angestrebten Verbesserungen zu erreichen.

Gemäß einem beispielhaften Aspekt der Erfindung wird ein Verfahren offenbart, das Verfahren umfassend: Erhalten einer Sendung; Prüfen, ob die Sendung in ein Registerfach der Vielzahl von Registerfächern aufgenommen werden soll; Aufnehmen der Sendung in ein Registerfach, falls die Prüfung ergeben hat, dass die Sendung in ein Registerfach der Vielzahl von Registerfächern aufgenommen werden soll; und Ablehnen der Sendung, falls die Prüfung ergeben hat, dass die Sendung nicht in ein Registerfach der Vielzahl von Registerfächern aufgenommen werden soll. Das Verfahren wird beispielsweise durch eine erste Vorrichtung oder eine Komponente der ersten Vorrichtung ausgeführt Bei der Sendung kann es sich beispielsweise um eine Briefsendung handeln. Das Verfahren kann ferner umfassen das Ausgeben der Sendung an eine Person, die sich gegenüber der ersten Vorrichtung erfolgreich authentisiert hat

Die vorliegende Anmeldung offenbart ferner folgende beispielhafte Ausführungsformen:
- Eine Vorrichtung umfassend Mittel zur Ausführung und/oder Steuerung des Verfahrens, wobei die Vorrichtung die erste Vorrichtung oder die Komponente davon ist. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.
- Eine Vorrichtung, die zumindest einen Prozessor und zumindest einen Speicher, der Programmcode beinhaltet, umfasst, wobei der Speicher und der Programmcode eingerichtet sind, eine oder die Vorrichtung mit dem zumindest einen Prozessor dazu zu veranlassen, zumindest das Verfahren auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden
- Eine Verwendung einer dieser Vorrichtungen, um eine Sendung für eine Person zu hinterlegen, beispielsweise in der ersten Vorrichtung, und der Person zu ermöglichen, Zugriff auf diese Sendung zu erhalten, beispielsweise durch das Ausgeben der Sendung.
- Ein Computerprogramm, umfassend Programmanweisungen, die einen Prozessor zur Ausführung und/oder Steuerung zumindest der folgenden Schritte veranlassen, wenn das Computerprogramm auf dem Prozessor läuft: Erhalten einer Sendung (insbesondere einer Briefsendung) an einer ersten Vorrichtung, die eine Vielzahl von Registerfächern umfasst; Prüfen, ob die Sendung in ein Registerfach der Vielzahl von Registerfächern aufgenommen werden soll; Aufnehmen der Sendung in ein Registerfach, falls die Prüfung ergeben hat, dass die Sendung in ein Registerfach der Vielzahl von Registerfächern aufgenommen werden soll; und Ablehnen der Sendung, falls die Prüfung ergeben hat, dass die Sendung nicht in ein Registerfach der Vielzahl von Registerfächern aufgenommen werden soll. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1a: eine schematische Darstellung einer beispielhaften Ausführungsform einer Vorrichtung gemäß der vorliegenden Erfindung;
- Fig. 1b: eine schematische Darstellung einer beispielhaften Ausführungsform einer Vorrichtung gemäß der vorliegenden Erfindung;
- Fig. 2: eine schematische Darstellung einer beispielhaften Ausführungsform einer Komponente der Vorrichtung gemäß der vorliegenden Erfindung;
- Fig. 3: ein Flussdiagramm einer beispielhaften Ausführungsform eines Verfahrens gemäß der vorliegenden Erfindung.
- Fig. 4: eine schematische Darstellung einer beispielhaften Ausführungsform eines Verfahrens gemäß der vorliegenden Erfindung.
- Fig. 5: eine schematische Darstellung einer beispielhaften Ausführungsform eines Teilaspekts eines Verfahrens gemäß der vorliegenden Erfindung.
- Fig. 6: eine schematische Darstellung einer beispielhaften Ausführungsform einer Vorrichtung gemäß der vorliegenden Erfindung;

### Detaillierte Beschreibung einiger beispielhafter Ausführungsformen der Erfindung

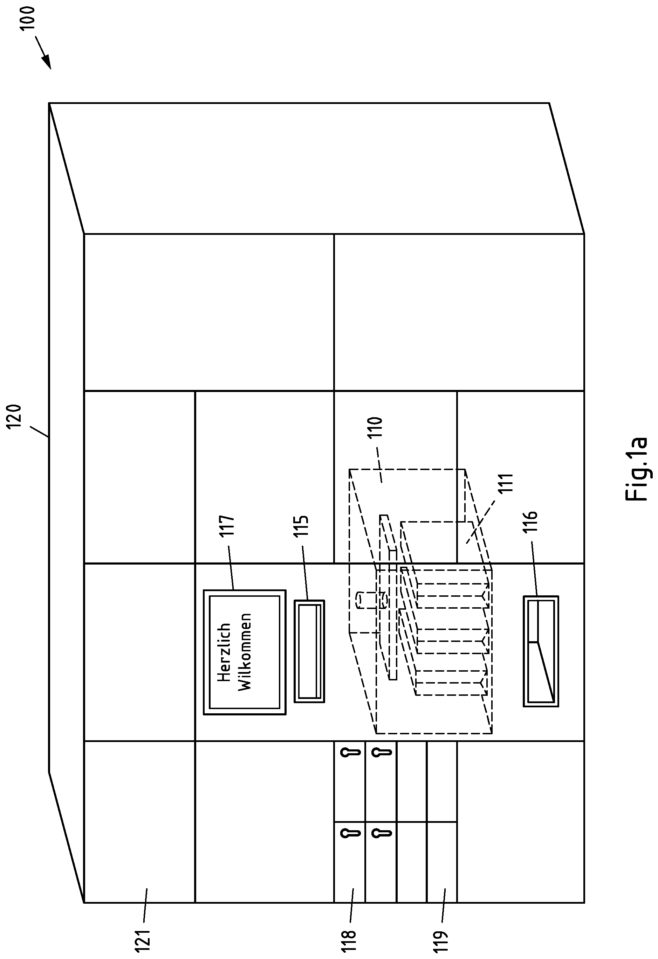

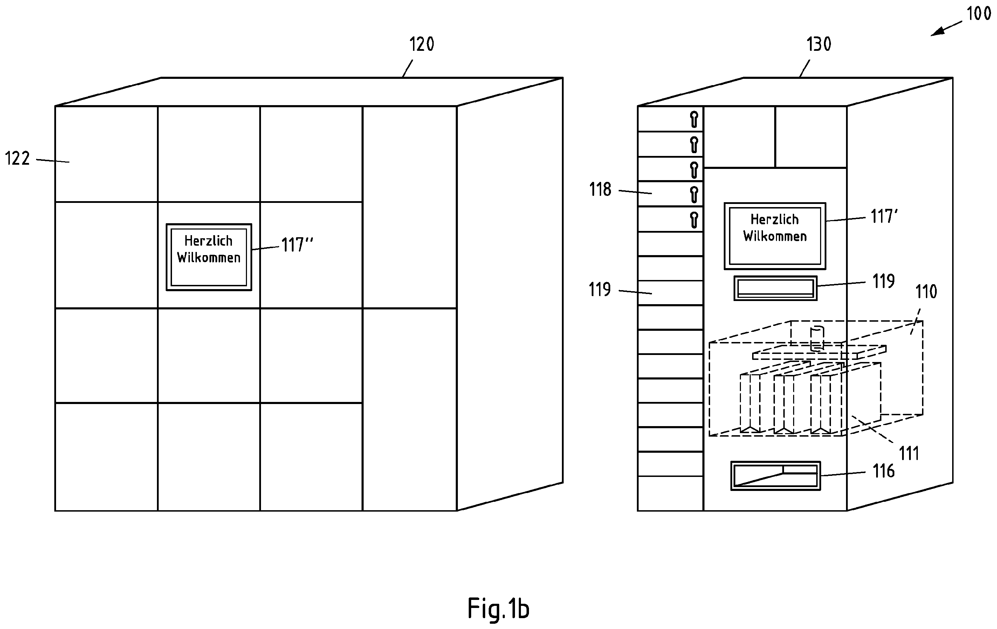

Fig. 1a und Fig. 1b zeigen eine beispielhafte erste Vorrichtung 100 gemäß unterschiedlichen beispielhaften Ausführungsformen der vorliegenden Erfindung.

In Fig. 1a umfasst die erste Vorrichtung 100 eine Fachanlage 120 mit mehreren Fächern 122 und einer Registeranlage 110 mit einer Vielzahl von Registerfächern 111, die beispielsweise in einem der Fächer 122 untergebracht ist. In Fig. 1b umfasst die erste Vorrichtung 100 eine Fachanlage 120, sowie eine von der Fachanlage 120 getrennte Anlage 130, in der die Registeranlage 110 mit einer Vielzahl von Registerfächern 111 untergebracht ist. Die Trennung der Anlage 130 und der Fachanlage 120 kann beispielsweise wie dargestellt räumlich erfolgen, beispielsweise aber auch (nur) systematisch (z.B. durch getrennt ablaufende Computerprogramme, getrennte Kommunikations- bzw. Benutzerschnittstellen und/oder getrennte Datenspeicher). In anderen beispielhaften Ausführungsformen kann die erste Vorrichtung nicht alle dargestellten Komponenten der (Fach-)Anlagen 120 und 130 umfassen, z.B. die Anlage 130 und nicht die Fachanlage 120 umfassen, oder nur einige Komponenten der Anlage 130 umfassen.

Wie in Fig. 1a und Fig. 1b dargestellt, umfasst die erste Vorrichtung 100 eine Vielzahl von Registerfächern 111. Jedes der Registerfächer 111 ist zur Aufnahme zumindest einer Sendung, insbesondere einer Briefsendung vorgesehen. Briefsendungen umfassen beispielsweise Sendungen der Formate Standard, Kompakt, Groß oder Maxi der Deutschen Post und/oder ähnliche Formate anderer Postdienstanbieter. Briefsendungen können auch Büchersendungen und/oder in Tüten verpackte Sendungen umfassen. Briefsendungen können auch dadurch charakterisiert sein, dass sie üblicherweise durch Briefzusteller (und nicht durch Paketdienste) zugestellt werden. Alternativ oder zusätzlich können Sendungen beispielsweise anhand ihrer Abmessungen als Briefsendungen kategorisiert werden. Beispielsweise können Briefsendungen Sendungen umfassen, deren kleinstes Maß geringer als ein erstes Maximalmaß ist (z.B. eine Höhe unter 1 cm, 2 cm oder 5cm) und/oder deren größtes Maß geringer als ein zweites Maximalmaß ist (z.B. eine Länge unter 25 cm, 30 cm oder 40 cm) und/oder deren Summe aus zwei oder drei Maßen geringer als ein drittes Maximalmaß ist (z.B. Summe aus Länge, Breite und Höhe unter 40 cm, 50 cm oder 60 cm ) und/oder deren geringstes Maß um einen Mindestfaktor geringer ist als das längste Maß oder als beide verbleibenden Maße (z.B. eine Höhe, die um Faktor 2, 5 oder 10 geringer ist als die Länge, Breite und/oder Summe aus Länge und Breite). Alternativ oder zusätzlich können Briefsendungen nur Sendungen bis zu einem Maximalgewicht umfassen, beispielsweise bis zu 50 g, 500 g oder 1000 g.

In beispielhaften Ausführungsformen kann zumindest ein Registerfach der Vielzahl von Registerfächern 111, beispielsweise nur ein Registerfach, einige Registerfächer oder alle Registerfächer 111, eingerichtet sein, mehrere Sendungen gleichzeitig zu lagern, insbesondere mehrere Sendungen, die mit demselben Sendungsempfänger oder derselben Gruppe von Sendungsempfängern assoziiert sind. Ein Sendungsempfänger kann dabei im Folgenden auch immer eine Gruppe von Sendungsempfängern, beispielsweise eine Gruppe von Mitarbeitern derselben Firma, repräsentieren. Die Registerfächer 111 sind nicht öffentlich zugänglich und befinden sich beispielsweise im Inneren der ersten Vorrichtung 100. Für das Erhalten und die Ausgabe von Sendungen in ein Registerfach 111 umfasst die erste Vorrichtung 100 beispielsweise eine Eingabestelle 115 und eine Ausgabestelle 116, wobei die Eingabestelle 115 und die Ausgabestelle 116 beispielsweise aber auch durch eine gemeinsame Einheit gebildet werden können.

In beispielhaften Ausführungsformen können die Registerfächer 111 Teil einer Registeranlage 110 sein. Dazu kann die erste Vorrichtung 100 ferner eine Registeranlage 110 umfassen. In manchen dieser beispielhaften Ausführungsformen kann die Registeranlage 110 dazu eingerichtet sein, das Aufnehmen der Sendung in das Registerfach 111 der Sendung durchzuführen und/oder das Ausgeben der Sendung durchzuführen. In beispielhaften Ausführungsformen können die Registerfächer 111 in der Registeranlage 110 beweglich, insbesondere um eine Achse drehbar, angeordnet sein. In manchen dieser beispielhaften Ausführungsformen sind die Registerfächer 111 in der Registeranlage 110 entlang einer geschlossenen, insbesondere ovalen Trajektorie bewegbar, beispielsweise indem die Registerfächer auf oder an einem umlaufenden Band angeordnet sind. Die Aufnahme von Sendungen wird dann beispielsweise erreicht, indem das Registerfach 111, in das die Sendung aufgenommen werden soll, so bewegt wird, dass es sich unterhalb einer Aufnahmeöffnung befindet. Die Registerfächer 111 können beispielsweise oben oder seitlich offen sein, alternativ können sie beispielsweise über einen Mechanismus verfügen, der die Registerfächer 111 öffnet, wenn Sendungen aufgenommen werden sollen. Für die Ausgabe von Sendungen können die Registerfächer 111 beispielsweise über eine Ausgabeöffnung bewegt werden und beispielsweise nach unten geöffnet oder gedreht werden. Alternativ können die Sendungen beispielsweise durch einen Greifmechanismus aus den Registerfächern 111 entnommen werden, wenn diese oben oder seitlich geöffnet sind. Alternativ können die Registerfächer 111 in einem Regalsystem angeordnet sein, beispielsweise horizontal oder vertikal. Die Aufnahme oder Ausgabe von Sendungen wird dann beispielsweise durch eine horizontal bzw. vertikal bewegbare Ablage und Schiebe- bzw. Rollvorrichtungen in der Ablage und den Registerfächern 111, die die Sendung von der Ablage in das Registerfach 111 und andersherum befördern, erreicht. In beispielhaften Ausführungsformen kann zumindest eines der Registerfächer 111 dazu eingerichtet sein, seine Größe zu verändern. So können die Registerfächer 111 beispielsweise an die Anzahl und Größe der Sendungen, die in den Registerfächern 111 aufgenommen werden sollen, individuell angepasst werden. In beispielhaften Ausführungsformen kann zumindest eines der Registerfächer eine Lagergröße und eine Eingabegröße haben, wobei für die Eingabe einer Sendung in das zumindest eine Registerfach und/oder die Ausgabe einer Sendung aus dem zumindest einen Registerfach das Registerfach von der Lagergröße auf die Eingabegröße vergrößert wird und nach der Eingabe und/oder Ausgabe wieder auf die Lagergröße verkleinert wird.

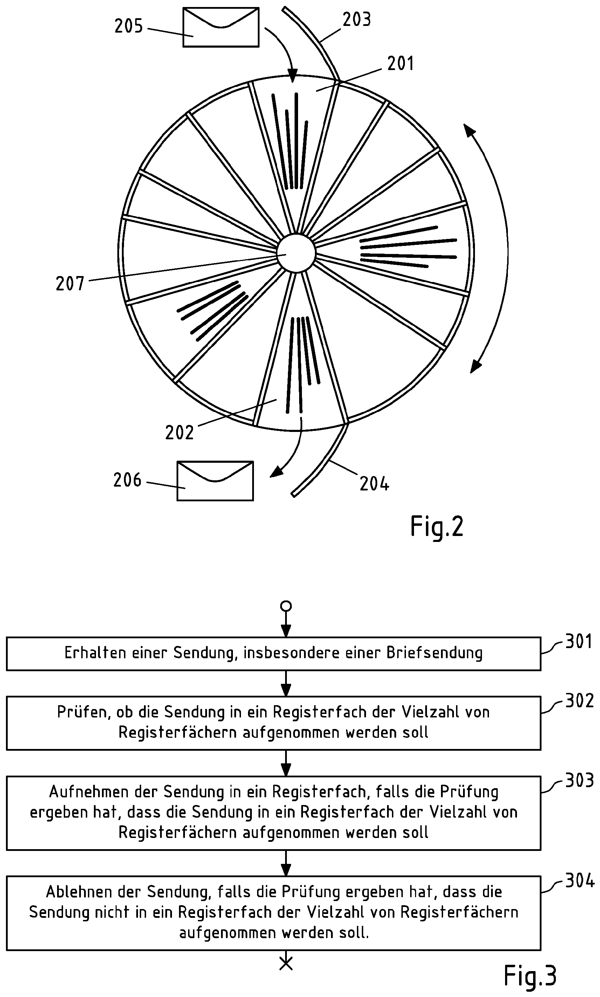

Die Registeranlage 110 ist in Fig. 2 schematisch in einer beispielhaften Ausführungsform dargestellt. Die Registerfächer 201, 202 sind um eine Drehachse 207 angeordnet, diese ist beispielsweise in beide Richtungen drehbar. Zur Aufnahme einer oder mehrerer Sendungen 205, wird das Registerfach 201 durch eine Drehung entlang der Drehachse 207 unter einer Aufnahmeöffnung 203 bewegt. Die Aufnahmeöffnung 203 kann beispielsweise dauerhaft offen sein, sodass die Sendungen 205, die sich vor der Aufnahmeöffnung 203 befinden, in das Registerfach 201 fallen. Alternativ kann die Aufnahmeöffnung 203 zur Aufnahme der Sendungen 205 in das Registerfach 201 beispielsweise wie dargestellt durch einen Klapp- oder alternativ durch einen Schiebemechanismus geöffnet werden, beispielsweise nachdem das Registerfach 201 unter die Aufnahmeöffnung 203 bewegt wurde. Alternativ oder zusätzlich kann beispielsweise das Registerfach 201 durch beispielsweise einen Klapp- oder Schiebemechanismus geöffnet werden. Nachdem die Sendung 205 in das Registerfach eingegeben wurde, kann die Aufnahmeöffnung 203 und/oder das Registerfach 201 wieder geschlossen werden. Anschließend kann beispielsweise eine anderes Registerfach durch eine Drehbewegung entlang der Drehachse 207 für die Aufnahme weiterer Sendungen unter die Aufnahmeöffnung 203 oder ein Registerfach für die Ausgabe von Sendungen über die Ausgabeöffnung 204 bewegt werden. Für die Ausgabe von einer oder mehrerer Sendungen 206 kann beispielsweise das Registerfach 202 über die Ausgabeöffnung 204 durch eine Drehung entlang der Drehachse 207 bewegt werden. Die Ausgabeöffnung 204 und/oder das Registerfach 202 kann dann beispielsweise durch einen Klapp- oder Schiebemechanismus geöffnet werden, beispielsweise wie dargestellt durch Öffnung einer Klappe der Ausgabeöffnung 204, sodass die Sendungen 206 aus dem Registerfach 202 ausgegeben werden, indem diese beispielsweise aus dem Registerfach 202 fallen. Anschließend kann die Ausgabeöffnung und/oder das Registerfach geschlossen werden, sodass die Registeranlage 110 bereit für die Aufnahme oder Ausgabe weiterer Sendungen ist.

In beispielhaften Ausführungsformen, bei denen die erhaltene Sendung eine Briefsendung ist, kann die erste Vorrichtung 100 ferner mehrere Fächer umfassen, von denen zumindest einige Fächer 118, 119, 122 zur Aufnahme von Briefsendungen ausgelegt sind. Jedes der einigen Fächer 118, 119, 122 ist zur Aufnahme einer oder mehrerer Briefsendungen, z.B. für einen individuellen Sendungsempfänger, vorgesehen (also ähnlich wie oder exakt wie bei herkömmlichen Postfächern). Einem individuellen Sendungsempfänger können auch mehrere Fächer 118, 119, 122 zugeordnet sein. Jedes der einigen Fächer 118, 119, 122 kann im Grundzustand verriegelt bzw. geschlossen sein. Manche Fächer 118 können beispielsweise mit einem mechanischen Schloss verriegelt bzw. geöffnet werden, dessen Schlüssel sich beispielsweise im Besitz der individuellen Sendungsempfänger oder der Gruppe von Sendungsempfängern, sowie dem Zusteller befindet. Manche Fächer 119, 122 können beispielsweise anweisungsgesteuert und individuell, beispielsweise durch eine in der ersten Vorrichtung 100 vorgesehene Schlosssteuereinheit, elektrisch entriegelt bzw. geöffnet werden. In manchen dieser beispielhaften Ausführungsformen kann zumindest ein Fach 122 dieser Fächer auch zur Aufnahme von Paketsendungen ausgelegt sein. Paketsendungen sind beispielsweise Sendungen, die keine Briefsendungen sind, beispielsweise Sendungen, deren Abmessungen und/oder Gewicht nicht die Kriterien für Briefsendungen erfüllen. Im vorliegenden Ausführungsbeispiel gibt es sowohl Fächer 118, die mechanisch entriegelbar sind, als auch Fächer 119, 122, die anweisungsgesteuert entriegelbar sind. In anderen Ausführungsbeispielen können anweisungsgesteuert entriegelbare Fächer 119, 122 nicht vorhanden sein, oder mechanisch entriegelbare Fächer 118 nicht vorhanden sein.

In beispielhaften Ausführungsformen, bei denen die erhaltene Sendung eine Briefsendung ist, kann die erste Vorrichtung 100 ferner eine Fachanlage 120 mit mehreren Fächern umfassen, von denen zumindest einige Fächer 122 zur Aufnahme von Paketsendungen ausgelegt sind. Jedes der einigen Fächer 122 der Fachanlage 120 ist dann beispielsweise zur Aufnahme einer oder mehrerer Paketsendungen und/oder eines oder mehrerer Objekte, z.B. für einen individuellen Sendungsempfänger, vorgesehen. Einem individuellen Sendungsempfänger können auch mehrere Fächer zugeordnet sein. Jedes Fach ist im Grundzustand verriegelt bzw. geschlossen und kann anweisungsgesteuert und individuell durch beispielsweise eine in der Fachanlage 120 vorgesehene Schlosssteuereinheit elektrisch entriegelt bzw. geöffnet werden. Ein Beispiel einer derartigen Fachanlage 120 ist eine Fachanlage gemäß dem bekannten Packstationskonzept der Anmelderin.

In beispielhaften Ausführungsformen kann die Registeranlage 110 in einem Fach der ersten Vorrichtung 100, beispielweise in einem Fach der Fachanlage 120 wie in Fig. 1a dargestellt, untergebracht sein. In manchen dieser beispielhaften Ausführungsformen kann das Fach nur Personen zugänglich sein, die sich gegenüber der ersten Vorrichtung 100 authentisiert haben. Diese Personen können beispielsweise Personen sein, die Sendungen in die erste Vorrichtung 100 eingeben möchten, beispielsweise Zusteller, oder Personen, die Sendungen aus der Registerfachanlage 120 abholen möchten, beispielsweise die Sendungsempfänger.

Dazu kann die erste Vorrichtung 100 mit einer oder mehreren Kommunikationsschnittstelle(n) als Benutzerschnittstelle 117 ausgerüstet sein, die beispielsweise eine Schnittstelle zur drahtlosen Kommunikation mit einem Mobilgerät umfasst/umfassen. Eine drahtlose Kommunikationsverbindung basiert beispielsweise auf optischer Übertragung und/oder mittels Kommunikation, die auf elektrischen, magnetischen oder elektromagnetischen Signalen oder Feldern beruht, insbesondere Nahbereichs-Kommunikation z.B. beruhend auf Bluetooth, WLAN, ZigBee, NFC und/oder RFID.

In anderen Ausführungsformen umfasst die erste Vorrichtung 100 aber beispielsweise keine Schnittstelle zur drahtlosen Kommunikation mit einem Mobilgerät, oder eine solche Schnittstelle ist, beispielsweise grundsätzlich oder nur in bestimmten Situationen, nicht nutzbar oder wird nicht genutzt, obwohl sie grundsätzlich nutzbar wäre. Beispielsweise kann dann eine Kommunikation von Daten, die auf dem Mobilgerät vorhanden sind und beispielsweise angezeigt werden, mittels eines Benutzers erfolgen, der diese Daten oder einen Teil dieser Daten beispielsweise mittels einer Eingabeeinheit der Benutzerschnittstelle 117 (z.B. einer Tastatur oder einem berührungsempfindlichen Bildschirm mit Bildschirmtastatur oder einem Spracherkennungsmodul oder einem optischen Scanner der Registerfachanlage 120) an der ersten Vorrichtung 100 eingibt und somit übermittelt Selbstverständlich kann ein Benutzer beispielsweise auch Daten eingeben, die nicht auf dem Mobilgerät vorhanden sind und/oder dort angezeigt werden. Darüber hinaus kann die erste Vorrichtung 100 beispielhaft auch eine Ausgabeeinheit als Benutzerschnittstelle 117 umfassen, z.B. zum Anzeigen von Informationen, z.B. über einen Bildschirm.

In beispielhaften Ausführungsformen, in denen die erste Vorrichtung 100 ferner eine Fachanlage 120 mit mehreren Fächern umfasst (die beispielsweise zumindest teilweise zur Aufnahme von Paketsendungen und/oder zumindest teilweise zur Aufnahme von Briefsendungen eingerichtet sind), kann die erste Vorrichtung 100 eine, beispielsweise gemeinsame Benutzerschnittstelle 117 aufweisen, über die, beispielsweise nach erfolgreicher Authentifizierung, sowohl Zugang zu einem oder mehreren der Fächer der Fachanlage erhalten werden kann als auch die Eingabe und/oder das Ausgeben der Sendung bewirkt werden kann. Eine solche beispielhafte Ausführungsform ist in Fig. 1a dargestellt. In anderen Ausführungsformen umfasst die erste Vorrichtung 100 aber beispielsweise mehrere Benutzerschnittstellen 117', 117", mit denen jeweils entweder Zugang zu einem oder mehreren der Fächer der Fachanlage oder das Ausgeben der Sendung bewirkt werden kann, wie beispielsweise in Fig. 1b dargestellt. Beispielsweise ist eine Benutzerschnittstelle 117" in der Fachanlage 120 eingerichtet, um Zugang zu den Fächern 122 der Fachanlage 120 zu erhalten und eine Benutzerschnittstelle 117', mit der die Eingabe und/oder das Ausgeben der Briefsendung bewirkt werden kann.

Die erste Vorrichtung 100 ist beispielsweise auch zur Kommunikation mit einem Backend-System eingerichtet, verfügt also beispielsweise über eine Kommunikationsschnittstelle, die einen Zugang zum Internet oder zu einem anderen Kommunikationsnetz, an das das Backend-System angeschlossen ist, ermöglicht Die erste Vorrichtung 100 ist also insbesondere zur Fern-Kommunikation eingerichtet, weist also beispielsweise eine Schnittstelle zu einem zellularen Mobilfunksystem, eine DSL-Schnittstelle oder eine Local Area Network (LAN)-Schnittstelle auf, mittels der sie über die Kommunikationsverbindung mit dem System 100 kommunizieren kann.

Fig. 3 zeigt ein Flussdiagramm 300 einer beispielhaften Ausführungsform eines Verfahrens gemäß der vorliegenden Erfindung, beispielsweise ausgeführt und/oder gesteuert von einer ersten Vorrichtung 100, wobei die erste Vorrichtung 100 eine Vielzahl von Registerfächern 111 umfasst

In Schritt 301 wird eine Sendung, insbesondere eine Briefsendung, von der ersten Vorrichtung 100 erhalten, beispielsweise von einer Person (beispielsweise einem Zusteller), die die Sendung in die erste Vorrichtung 100 eingibt, beispielsweise in eine Öffnung der ersten Vorrichtung 100 (bei dieser Öffnung der ersten Vorrichtung 100 handelt es sich beispielsweise aber nicht um das Registerfach, in dem die Sendung später ggf. aufgenommen werden soll). Dazu legt beispielsweise die Person die Sendung in die Eingabestelle 115 ein. In beispielhaften Ausführungsformen kann die Eingabestelle nur Personen zugänglich sein, die sich erfolgreich gegenüber der ersten Vorrichtung 100 authentifiziert haben. Der Zugang wird beispielsweise gewährt durch ein Öffnen einer Klappe oder durch ein Ausfahren einer Schublade. Eine Authentifizierung kann beispielsweise durch die Übermittlung von Authentifizierungsinformationen über die Benutzerschnittstelle 117 der ersten Vorrichtung 100 erfolgen. Beispielsweise kann die Person sich durch Eingabe einer Benutzerkennung und zugehörigem Passwort authentifizieren und/oder durch eine Übermittlung von Authentifizierungsinformationen über Nahbereichs-Kommunikation, beispielsweise von einer App auf dem Mobilgerät der Person oder von einem anderen Authentifizierungsobjekt, wie z.B. einer Chipkarte. Die Überprüfung der Authentifizierungsinformationen kann anschließend beispielsweise durch die erste Vorrichtung 100 selbst geschehen, beispielsweise indem die übermittelten Authentifizierungsinformationen mit in der ersten Vorrichtung 100 (zumindest temporär) gespeicherten Authentifizierungsinformationen abgeglichen werden. Zusätzlich oder alternativ können die übermittelten Authentifizierungsinformationen an das Backend-System zur dortigen Prüfung weitergeleitet werden und anschließend das Ergebnis der Authentifizierung von dem Backend-System an die erste Vorrichtung 100 übermittelt werden.

In Schritt 302 erfolgt eine Prüfung, ob die erhaltene Sendung in ein Registerfach der Vielzahl der Registerfächer 111 aufgenommen werden soll. In beispielhaften Ausführungsformen kann das Prüfen in Reaktion auf das Erhalten der Sendung oder nach dem Erhalten der Sendung erfolgen. Beispielsweise nachdem über die Benutzerschnittstelle 117 eine Information erhalten wurde, dass eine oder mehrere Sendungen in die erste Vorrichtung 100 eingebracht, beispielsweise eingelegt, wurden. Alternativ oder zusätzlich kann die erste Vorrichtung 100 das Erhalten einer Sendung (oder mehrerer Sendungen) beispielsweise anhand von Sensoren erkennen. Abhängig von dem Ergebnis der Prüfung in Schritt 302, erfolgt anschließend in Schritt 303 das Aufnehmen der Sendung in ein Registerfach oder in Schritt 304 das Ablehnen der Sendung.

Vorzugsweise wird die erhaltene Sendung in Schritt 303 in ein Registerfach aufgenommen, welches noch keine Sendungen für einen anderen Sendungsempfänger enthält. Befinden sich für den Sendungsempfänger der erhaltenen Sendung bereits Sendungen in einem oder mehreren Registerfächern, wird die erhaltene Sendung vorzugsweise in eines dieser Registerfächer aufgenommen.

Das Ablehnen einer erhaltenen Sendung in Schritt 304 kann beispielsweise durch den Auswurf bzw. die Ausgabe der Sendung oder eine Mitteilung an die Person, die die Sendungen eingegeben hat, die Sendung wieder zu entnehmen, erfolgen. Die Ausgabe kann dabei beispielsweise erst erfolgen, nachdem die Person sich authentifiziert hat, sodass sichergestellt ist, dass keine unautorisierte Person Zugriff zu den Sendungen erhält. In den beispielhaften Ausführungsformen, in denen die erste Vorrichtung 100 zusätzliche Fächer 118, 119, 122 umfasst, kann nach der Ablehnung der erhaltenen Sendung beispielsweise eine Information an die Person erfolgen, dass die Sendung in eins der Fächer 118, 119, 122 aufgenommen werden soll. Dazu kann das Fach beispielsweise von der ersten Vorrichtung 100 elektronisch entriegelt oder von der Person mechanisch geöffnet werden. In den beispielhaften Ausführungsformen, in denen die erste Vorrichtung 100 keine zusätzliche Fächer 118, 119, 122 umfasst, können die Sendungen beispielsweise von der Person mitgenommen und anderweitig dem Sendungsempfänger zugestellt werden (beispielsweise in dessen Briefkasten).

In beispielhaften Ausführungsformen kann das Prüfen in Schritt 302 beispielsweise zumindest auf einer Eigenschaft oder Information der Sendung basieren. Die Eigenschaft oder Information der Sendung kann beispielsweise den Sendungsempfänger, die Empfängeradresse und/oder alle oder einzelne Maße (Länge und/oder Breite und/oder Tiefe und/oder Gewicht), also die Größe der Sendung umfassen. Beispielsweise kann die erste Vorrichtung 100 dazu eingerichtet sein, dass nur Sendungen für bestimmte Empfängeradressen, z.B. in einem bestimmten Umkreis des Standorts der ersten Vorrichtung 100, oder für bestimmte Sendungsempfänger, die sich beispielsweise zuvor bei dem Betreiber der ersten Vorrichtung 100 registriert haben, aufgenommen werden sollen. Beispielsweise kann eine Sendung alternativ oder zusätzlich abgelehnt werden, wenn dem Sendungsempfänger bereits ein Fach 118, 119, 122 zugeordnet ist und die Sendung daher in dem zugeordneten Fach und nicht in ein Registerfach 111 aufgenommen werden soll. Die Fächer 118, 119, 122 können dabei einem Sendungsempfänger dauerhaft fest zugeordnet sein, beispielsweise indem der Sendungsempfänger diese von dem Betreiber der ersten Vorrichtung 100 anmietet (z.B. wie bei einem herkömmlichen Postfach). Dies ist vorzugsweise der Fall für die Fächer 118 mit einem mechanischen Schloss, deren Schlüssel dem Sendungsempfänger zu Verfügung steht. Die Fächer 119, 122 mit elektronisch entriegelbarem Schloss können vorzugsweise dynamisch belegt werden und werden nur so lange einem Sendungsempfänger zugeordnet, solange das Fach 119, 122 eine Sendung für diesen enthält. Alternativ oder zusätzlich kann die erste Vorrichtung 100 beispielsweise eine Liste mit aufzunehmenden Sendungen beispielsweise vom Backend-System erhalten, sodass nur diese Sendungen aufgenommen werden sollen. Alternativ oder zusätzlich kann die erste Vorrichtung 100 dazu eingerichtet sein, nur Sendungen mit bestimmten Größen oder Sendungen bis zu einer Maximalgröße aufzunehmen. Die Größe kann dabei beispielsweise durch die Länge, Breite, Tiefe, oder das Gewicht der Sendung oder eine beliebige Kombination daraus bestimmt sein. In manchen dieser beispielhaften Ausführungsformen kann die Eigenschaft oder Information der Sendung bei Erhalt der Sendung automatisch erfasst werden, beispielsweise durch die erste Vorrichtung 100, die Registeranlage 110 oder eine andere Komponente der ersten Vorrichtung 100. Das Erfassen erfolgt beispielsweise durch Auslesen eines Barcodes, eines Datamatrix Codes (DMC), eines Quick Response (QR) Codes, eines Radio-Frequency Identification (RFID)-Transponders oder von Informationen in Klarschrift. Die ausgelesenen Informationen können beispielsweise bereits die Eigenschaft oder Information enthalten, alternativ können sie aber beispielsweise auch nur eine Sendungsidentifikation enthalten, die durch einen Abgleich mit hinterlegten Daten mit der benötigten Eigenschaft oder Information verknüpft werden kann. Die hinterlegten Daten können beispielsweise beim Verarbeiten der Sendung vor der Zustellung erfasst worden sein und an die erste Vorrichtung 100 übermittelt worden sein. Alternativ können die hinterlegten Daten im Backend-System gespeichert worden sein. In dem Fall kann die erste Vorrichtung 100 die Sendungsidentifikation an das Backend-System übermitteln und anschließend die benötigte Eigenschaft oder Information von dem Backend-System zurückerhalten. Alternativ oder zusätzlich kann die Eigenschaft oder Information beispielsweise durch Scannen und Ausmessen der Sendung und/oder Wiegen der Sendung in der Registerfachanlage 120 erfasst werden. Alternativ oder zusätzlich kann die Eigenschaft oder Information über die Benutzerschnittstelle 117, beispielsweise von der Person, die die Sendung eingegeben hat, erhalten werden.

In beispielhaften Ausführungsformen kann das Prüfen in Schritt 302 alternativ oder zusätzlich auf der aktuellen und/oder prognostizierten Auslastung der ersten Vorrichtung 100 basieren. Beispielsweise kann eine Sendung abgelehnt werden, wenn bereits alle Registerfächer belegt sind oder nach einer Prognose zukünftig belegt sein werden (beispielswiese aufgrund von einem oder mehreren vorab reservierten Registerfächern). Alternativ oder zusätzlich kann eine Sendung beispielsweise abgelehnt werden, wenn für den Sendungsempfänger bereits eine oder mehrere Sendungen in ein Registerfach aufgenommen worden sind und durch die weitere Sendung eine Kapazität des Registerfachs überschritten würde (indem beispielsweise die Gesamttiefe (oder eine andere Abmessung) der Sendungen eine festgelegte Maximaltiefe (oder eine andere Abmessung) des Registerfachs oder der Registeranlage 110 überschreiten würde, das Gesamtgewicht ein festgelegtes Maximalgewicht überschreiten würde oder die Gesamtanzahl der Sendungen eine festgelegte Maximalanzahl des Registerfachs überschreiten würde). In beispielhaften Ausführungsformen kann das Prüfen in Schritt 302 ferner ein Prüfen umfassen, ob eine oder mehrere bereits in einem oder mehreren Registerfächern 111 der Registeranlage 110 aufgenommenen Sendungen ausgegeben werden sollen. Wird beispielsweise eine Sendung abgelehnt und soll stattdessen in eines der Fächer 118, 119, 122 der ersten Vorrichtung 100 aufgenommen werden, werden vorzugsweise weitere bereits in einem oder mehreren Registerfächern 111 der Registeranlage 110 aufgenommenen Sendungen mit dem gleichen Sendungsempfänger ausgegeben, beispielsweise zusammen mit der abgelehnten Sendung. Dadurch können alle Sendungen, die für den gleichen Sendungsempfänger bestimmt sind, im gleichen Fach (z.B. 118, 119, 122) aufgenommen werden und das Registerfach kann andere Sendungen aufnehmen. Dazu ist die Registeranlage 110 in beispielhaften Ausführungsformen dazu eingerichtet, beim Ablehnen der Sendung eine oder mehrere weitere bereits in einem oder mehreren Registerfächern 111 der Registeranlage 110 aufgenommenen Sendungen auszugeben, beispielsweise zusammen mit der abgelehnten Sendung. Alternativ oder zusätzlich können beispielsweise alle Sendungen eines oder mehrerer ausgewählter Registerfächer 111 ausgegeben werden, anstatt die erhaltene Sendung abzulehnen, wenn die Sendung beispielsweise aufgrund der Auslastung abgelehnt werden würde. Die Auswahl des Registerfachs, aus dem die Sendungen ausgegeben werden, kann beispielsweise anhand der Anzahl oder der Größe der Sendungen des Registerfachs erfolgen. Beispielsweise werden die Sendungen des Registerfachs ausgegeben, welches die meisten Sendungen oder Sendungen mit der größten Gesamtgröße enthält. Alternativ oder zusätzlich können beispielsweise alle Sendungen eines oder mehrerer ausgewählter Registerfächer ausgegeben werden, wenn festgestellt wird, dass eins der Fächer 118, 119, 122 der ersten Vorrichtung 100 dem Sendungsempfänger der Sendungen zugeordnet ist.

In beispielhaften Ausführungsformen ist die erste Vorrichtung 100 eingerichtet, mehrere Sendungen auf einmal in Schritt 301 zu erhalten und für jede der mehreren Sendungen sequenziell das Prüfen in Schritt 302 durchzuführen. Weiterhin ist die erste Vorrichtung 100 beispielsweise dafür eingerichtet, für jede der mehreren Sendungen entsprechend dem Ergebnis des Prüfens das Aufnehmen oder Ablehnen durchzuführen. Das Aufnehmen oder Ablehnen muss dabei aber nicht notwendigerweise sequenziell erfolgen, sondern kann auch für mehrere Sendungen der mehreren Sendungen auf einmal erfolgen.

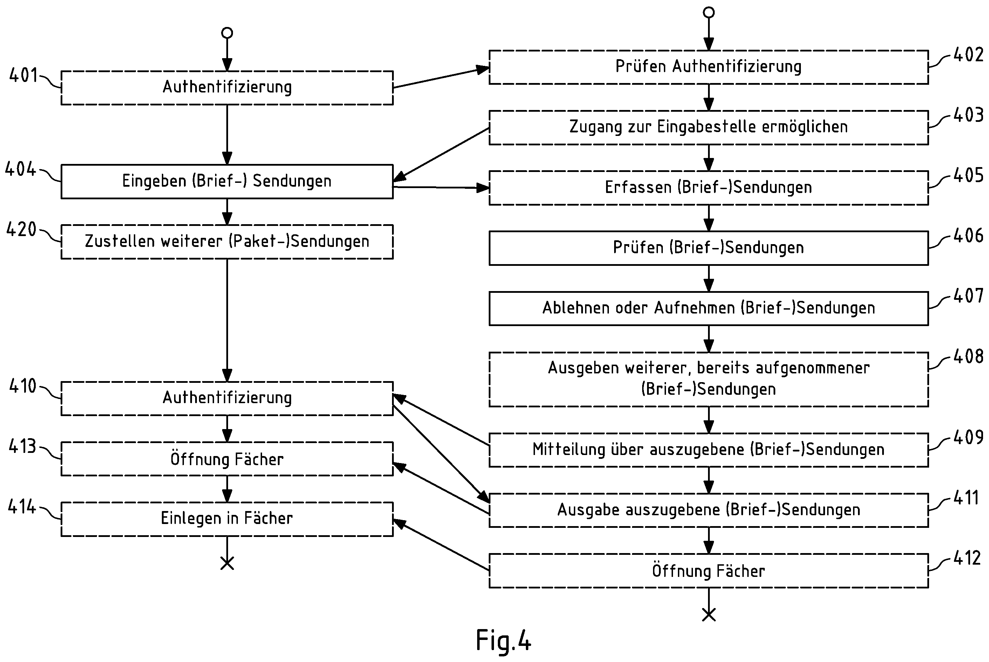

Fig. 4 ist ein Flussdiagramm einer beispielhaften Ausführungsform eines Verfahrens gemäß der vorliegenden Erfindung mit einer detaillierten Veranschaulichung einzelner Schritte. Dabei sind für dieses Ausführungsbeispiel optionale Schritte gestrichelt dargestellt.

In Schritt 401 authentifiziert der Zusteller sich gegenüber der ersten Vorrichtung 100 für die Eingabe von Sendungen. Dazu bedient er beispielsweise eine auf seinem Mobilgerät, beispielsweise einem Smartphone oder einem Handscanner, ausgeführte App. Dazu richtet beispielsweise das Mobilgerät eine Aufforderung an die erste Vorrichtung 100 zum Etablieren einer Nahbereich-Datenkommunikationsverbindung, wie beispielsweise optischer Übertragung, Bluetooth, ZigBee, NFC, RFID oder WLAN. Anschließend werden vom Mobilgerät zur ersten Vorrichtung 100 Authentifizierungsinformationen, vorzugsweise verschlüsselt, übertragen. Diese werden in Schritt 402 von der ersten Vorrichtung 100 geprüft Dies geschieht beispielsweise in der ersten Vorrichtung 100 selbst oder in einem über eine Fern-Datenkommunikationsverbindung angeschlossenen Backend-System. Alternativ können die Authentifizierungsinformationen beispielsweise auch in einem Authentifizierungsobjekt, wie beispielsweise einem NFC-Chip oder RFID-Token gespeichert sein oder beispielsweise auch durch den Zusteller an der ersten Vorrichtung 100 eingegeben werden, beispielsweise in Form einer Benutzerkennung und einem zugehörigen Passwort.

Im Falle einer erfolgreichen Authentifizierung erhält der Zusteller in Schritt 403 Zugang zu der Eingabestelle 115. Beispielsweise durch Öffnung des Fachs, in dem sich die Registeranlage 110 befindet, durch Öffnung einer Klappe der Eingabestelle oder durch Ausfahren einer Schublade. In Schritt 404 gibt der Zusteller anschließend Sendungen, beispielsweise einen Stapel an Briefsendungen - als ein für dieses Ausführungsbeispiel nicht notwendig einschränkendes Beispiel für Sendungen - in die Eingabestelle 115, beispielsweise ein oder mehrere Standard-, Kompakt-, Groß- und/oder Maxibriefe und/oder eine oder mehrere Büchersendungen und/oder ein oder mehrere flache Päckchen. Anschließend kann der Zusteller - beispielsweise durch Bestätigung in der App auf seinem Mobilgerät, Bestätigung an der Benutzerschnittstelle 117 oder beispielsweise durch Schließen der Klappe der Eingabestelle oder Schließen der Schublade - bestätigen, dass die Eingabe der Briefsendungen erfolgt ist.

Nach Erhalt der Briefsendungen erfasst die erste Vorrichtung 100 in Schritt 405 die einzelnen Briefsendungen. Dazu erfasst sie beispielsweise den Sendungsempfänger, die Empfängeradresse, die Maße und/oder das Gewicht der Briefsendung. Anschließend prüft die erste Vorrichtung in Schritt 406 sequenziell für jede erhaltene Briefsendung, ob diese in ein Registerfach aufgenommen werden soll. Schritt 405 und Schritt 406 können dabei für jede einzelne Briefsendung hintereinander ausgeführt werden, alternativ kann zunächst Schritt 405 für alle Briefsendungen ausgeführt werden und erst dann mit Schritt 406 begonnen werden, alternativ können Schritt 405 und 406 für die Briefsendungen eines Sendungsempfängers hintereinander durchgeführt werden und anschließend mit Schritt 405 für einen weiteren Sendungsempfänger begonnen werden.

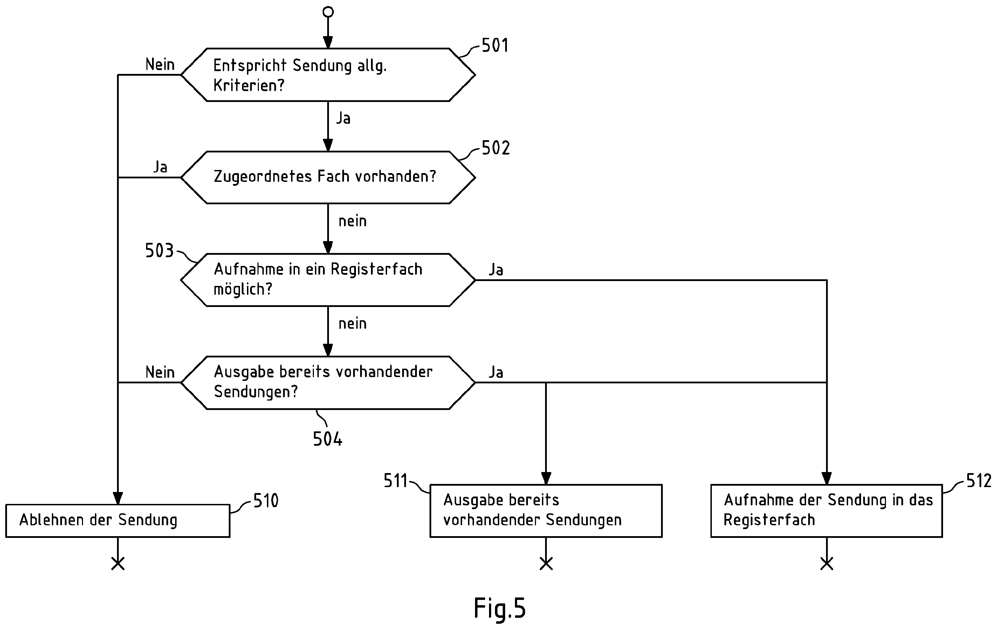

Fig. 5 ist ein Flussdiagramm einer beispielhaften Ausführungsform einer solchen Prüfung in Schritt 406 (wiederum anhand des nicht-einschränkenden Beispiels einer Briefsendung als Sendung) sowie der Schritte 407, also des Ablehnens oder Aufnehmens der Briefsendung, und 408, also des Ausgebens weiterer bereits aufgenommener Sendungen. Die Prüfung in Schritt 406 kann beispielsweise alle, (nur) mehrere oder nur einen der Prüfschritt(e) 501-504 der anhand in Fig. 5 dargestellten Ausführungsform enthalten. In Ausführungsformen, in denen Schritt 406 nicht alle in Fig. 5 dargestellten Prüfschritte 501-504 umfasst, können beispielsweise einer oder mehrere dieser Prüfschritte außerhalb der ersten Vorrichtung 100 in einem vorgelagerten Prozess erfolgen (beispielsweise die Schritte 501 und/oder 502), sodass die erste Vorrichtung 100 beispielsweise nur solche Sendungen erhält, für die die vorgelagerte Prüfung ergeben hat, dass eine Aufnahme in ein Registerfach grundsätzlich - aber abhängig vom Ergebnis der weiteren Prüfschritte - möglich ist (also beispielsweise der Schritt 501 ein "Ja" ergeben hat bzw. der Schritt 502 ein "Nein" ergeben hat). Die Prüfung in Schritt 406 bezieht sich dann auf diejenigen Prüfschritte, die in dem vorgelagerten Prozess noch nicht geprüft wurden.

Beispielsweise wird in Schritt 501 zunächst geprüft, ob die Briefsendung den allgemeinen Kriterien zur Aufnahme einer Sendung entspricht Diese Prüfung in Schritt 501 kann beispielsweise umfassen, ob der Sendungsempfänger für den Empfang von Sendungen an der ersten Vorrichtung 100 registriert ist Alternativ oder zusätzlich kann die Prüfung in Schritt 501 umfassen, ob die Empfängeradresse einer Adresse entspricht, für die Sendungen aufgenommen werden sollen. Zusätzlich kann in Schritt 501 beispielsweise geprüft werden, ob die Maße der Briefsendung eine Aufnahme in ein Registerfach zulassen, ob die Sendung also beispielsweise nicht zu lang, breit, tief und/oder schwer ist, um in ein Registerfach zu passen. Entspricht die Sendung nicht den allgemeinen Kriterien, wird die Sendung abgelehnt (Schritt 510). Andernfalls wird in Schritt 502 beispielsweise überprüft, ob dem Sendungsempfänger bereits eines der Fächer 118, 119, 122 zugeordnet ist, beispielsweise weil eins der Fächer 122 eine Paketsendung für den Sendungsempfänger enthält oder weil der Sendungsempfänger ein fest zugeordnetes Fach 118, 119, 122 gemietet hat. Ist beispielsweise bereits eines der Fächer 118, 119, 122 dem Empfänger zugeordnet, wird die Sendung abgelehnt (Schritt 510). Andernfalls wird in Schritt 503 geprüft, ob die Sendung in eines der Registerfächer 111 aufgenommen werden kann.

Dazu wird beispielsweise in Schritt 503 zunächst überprüft, ob es bereits ein Registerfach mit Sendungen für den gleichen Sendungsempfänger gibt. In dem Fall wird die Briefsendung vorzugsweise in dasselbe Registerfach aufgenommen. Hierzu kann beispielsweise zusätzlich überprüft werden, ob bei der Aufnahme der Briefsendungen die Kapazität des Registerfachs oder der Registeranlage 110 überschritten wird, beispielsweise die maximale Anzahl von Sendungen, die maximale Gesamttiefe der Sendungen und/oder das maximale Gesamtgewicht der Sendungen. Ist das nicht der Fall, wird die Sendung in das Registerfach aufgenommen. Andernfalls kann die Sendung beispielsweise abgelehnt werden oder alternativ überprüft werden, ob die Sendung in ein anderes leeres Registerfach aufgenommen werden kann bzw. soll. Eine Überprüfung, ob die Sendung in ein leeres Registerfach aufgenommen werden kann bzw. soll, erfolgt beispielsweise auch, falls es noch kein Registerfach mit Sendungen für den gleichen Sendungsempfänger gibt Die Prüfung basiert beispielsweise auf der (aktuellen oder prognostizierten) Auslastung der Registeranlage 110. Bei positivem Ergebnis wird die Briefsendung entsprechend in ein leeres Registerfach aufgenommen (Schritt 512).

Bei negativem Ergebnis der Prüfung in Schritt 503 kann beispielsweise in Schritt 504 geprüft werden, ob, anstatt die Briefsendung abzulehnen, eines der Registerfächer 111 geleert werden soll, also alle Sendungen dieses Registerfachs ausgegeben werden sollen. Die Ausgabe mehrerer Sendungen eines Registerfachs kann unter definierten Voraussetzungen einer Ablehnung einer einzelnen Briefsendung vorzuziehen sein. Beispielsweise wenn die maximale Anzahl an Briefen für die Registeranlage 110 das begrenzende Kriterium der Auslastung ist, da nach der Ausgabe der mehreren Sendungen anschließend noch weitere Briefsendungen in die Registeranlage 110 aufgenommen werden können und nur ein Fach 119, 122 der ersten Vorrichtung 100 durch die mehreren, ausgegebenen Sendungen des Registerfachs blockiert wird, anstatt mehrere Fächer 119, 122 der ersten Vorrichtung 100 mit einzelnen Sendungen zu belegen. In dem Fall werden diese Sendungen ausgegeben (Schritt 511) und die erhaltene Briefsendung in ein Registerfach aufgenommen (Schritt 512). Andernfalls wird die Briefsendung endgültig abgelehnt (Schritt 510).

Wendet man sich wieder der Fig. 4 zu, wird, wie bereits beispielhaft anhand von Fig. 5 erläutert wurde, in Schritt 407 entsprechend dem Ergebnis der Prüfung aus Schritt 406 die Briefsendung entweder in eines der Registerfächer 111 aufgenommen oder die Briefsendung abgelehnt Beim Ablehnen einer Briefsendung können, ähnlich zu Schritt 511 in Fig. 5, beispielsweise in Schritt 408 weitere bereits in einem oder mehreren Registerfächern 111 der Registeranlage 110 aufgenommenen Sendungen ausgegeben werden, vorzugsweise die Sendungen, die den gleichen Sendungsempfänger wie eine abgelehnte Sendung haben. Der Schritt 408 kann beispielsweise erfolgen, nachdem alle Briefsendungen in Schritt 406 überprüft wurden, oder beispielsweise jedes Mal, nachdem die Prüfung in Schritt 406 zu dem Ergebnis gekommen ist, dass eine Briefsendung abgelehnt wird.

Beim Ablehnen der Briefsendung kann die Briefsendung beispielsweise an der Ausgabestelle 116 ausgegeben werden. Die Ausgabe kann beispielsweise sequenziell beim Ablehnen der Briefsendung erfolgen oder gemeinsam für alle Briefsendungen, die ausgegeben werden sollen, nachdem die Prüfung in Schritt 406 für alle Briefsendungen abgeschlossen ist Dazu kann die erste Vorrichtung 100 beispielsweise eine Zwischenablage umfassen, in die abgelehnte Briefsendungen abgelegt werden. Die Ausgabestelle 116 kann ähnlich wie die Eingabestelle 115 mit einer Zugangsbeschränkung eingerichtet sein, sodass ein Benutzer beispielsweise erst nach (erneuter) Authentifizierung Zugang zu dieser erhält Dazu kann die erste Vorrichtung 100 beispielsweise in Schritt 409 dem Zusteller über die Benutzerschnittstelle 117 kommunizieren, dass ein Teil der Briefsendungen abgelehnt wurde und entnommen werden muss. Während der Verarbeitung der erhaltenen Briefsendungen durch die erste Vorrichtung 100 in den Schritten 405-409 kann der Zusteller beispielsweise andere Sendungen, die nicht in Registerfächer aufgenommen werden sollen, beispielsweise Paketsendungen, in die erste Vorrichtung 100 eingeben (Schritt 420). Anschließend kann der Zusteller in Schritt 410 der ersten Vorrichtung 100 beispielsweise über die App seines Mobilgeräts oder eine Eingabe an der Benutzerschnittstelle 117 kommunizieren, dass er bereit für die Entgegennahme der auszugebenen Briefsendungen ist und kann sich beispielsweise erneut authentifizieren, beispielsweise entsprechend dem Schritt 401. Nach erfolgreicher Authentifizierung kann die erste Vorrichtung 100 in Schritt 411 alle auszugebenden Sendungen ausgeben bzw. den Zugang zu der Ausgabestelle 116 ermöglichen.

In Schritt 412 öffnet die erste Vorrichtung 100 beispielsweise (soweit vorhanden) alle Fächer 119, 122, die elektronisch entriegelbar sind und in die die in Schritt 411 ausgegebenen Briefsendungen eingelegt werden sollen. Die manuell entriegelbaren Fächer 118 (soweit vorhanden) können beispielsweise in Schritt 413 von dem Zusteller selbst geöffnet werden. Anschließend gibt der Zusteller die in Schritt 411 ausgegebenen Briefsendungen in die geöffneten Fächer und verriegelt bzw. schließt diese anschließend wieder. Dazu kann die erste Vorrichtung 100 beispielsweise über die Benutzerschnittstelle 117 eine Information an den Zusteller ausgeben, welche Briefsendungen in welches Fach eingegeben werden sollen. Alternativ kann der Zusteller einen neuen Prozess starten, in dem er ein Fach an der ersten Vorrichtung 100 anfordert und angibt, welche Briefsendungen er dort einlegen wird. Vorzugsweise werden alle Briefsendungen eines Sendungsempfängers in ein Fach eingegeben. Die Ausgabe der Briefsendungen in Schritt 411 und die Öffnung der Fächer 118, 119, 122 in Schritt 412 bzw. 413 können dabei beispielsweise für alle Briefsendungen gemeinsam erfolgen. Alternativ werden beispielsweise zunächst alle Briefsendungen eines Sendungsempfängers ausgegeben und ein einzelnes Fach geöffnet, in das diese Briefsendungen eingegeben werden. Anschließend werden alle Briefsendungen des nächsten Sendungsempfängers ausgegeben und das nächste Fach geöffnet. Nachdem alle ausgegebenen Briefsendungen, die in die Fächer 118, 119, 122 eingelegt werden sollen, von dem Zusteller in Schritt 414 in die Fächer eingelegt wurden, ist der Zustellprozess beendet. In den beispielhaften Ausführungsformen, in denen die erste Vorrichtung 100 keine zusätzliche Fächer 118, 119, 122 umfasst, oder falls nicht ausreichend Fächer 118, 119, 122 verfügbar sind, können die Sendungen beispielsweise von dem Zusteller mitgenommen und anderweitig dem Sendungsempfänger zugestellt werden (beispielsweise durch Zustellung in dessen Briefkasten).

In beispielhaften Ausführungsformen kann das Verfahren ferner das Ausgeben der Sendung an eine Person umfassen, die sich gegenüber der ersten Vorrichtung 100 erfolgreich authentisiert hat. Für die Abholung einer Briefsendung authentisiert sich eine Person beispielsweise zunächst gegenüber der ersten Vorrichtung 100 dahingehend, dass sie berechtigt ist, die Briefsendungen in Empfang zu nehmen. Die Authentifizierung kann ähnlich dem Schritt 401 durch Übertragung von Authentifizierungsinformationen beispielsweise über eine App, einen Authentifizierungsobjekt oder die Eingabe einer Benutzerkennung erfolgen. Anhand der übertragenen Authentifizierungsinformationen kann die erste Vorrichtung 100 feststellen, für welche Briefsendungen die Person berechtigt ist, diese entgegenzunehmen. Sind solche Briefsendungen in der Registeranlage 110 aufgenommen worden, werden diese nach der erfolgreichen Authentifizierung aus der Registeranlage 110 ausgegeben und der Person wird durch die erste Vorrichtung 100 der Zugang zu der Ausgabestelle 116 ermöglicht, beispielsweise durch Öffnen einer Klappe, Öffnen des Fachs, in dem die Registeranlage 110 untergebracht ist und/oder Ausfahren einer Schublade. Falls von der ersten Vorrichtung 100 festgestellt wurde, dass Briefsendungen und/oder weitere Sendungen für die Person in einem der Fächer der ersten Vorrichtung 100 vorhanden sind, kann die erste Vorrichtung 100 beispielsweise über die Benutzerschnittstelle 117 eine Mitteilung an die Person ausgeben, dass weitere Sendungen aus den Fächern zu entnehmen sind. Für Fächer mit mechanischem Schloss 118 (soweit vorhanden) kann die Person diese beispielsweise mit ihrem Schlüssel öffnen. Für elektronisch entriegelbare Schlösser 119, 122 (soweit vorhanden) kann die erste Vorrichtung 100 diese beispielsweise im gleichen Schritt oder nach einer erneuten Authentifizierung entriegeln.

Die Schritte der Fig. 4 und Fig. 5 sind nicht notwendigerweise in der beschriebenen Reihenfolge auszuführen und können, solange keine zwingend logische Reihenfolge existiert, untereinander vertauscht werden, auch können die Schritte teilweise parallel voneinander ausgeführt werden.

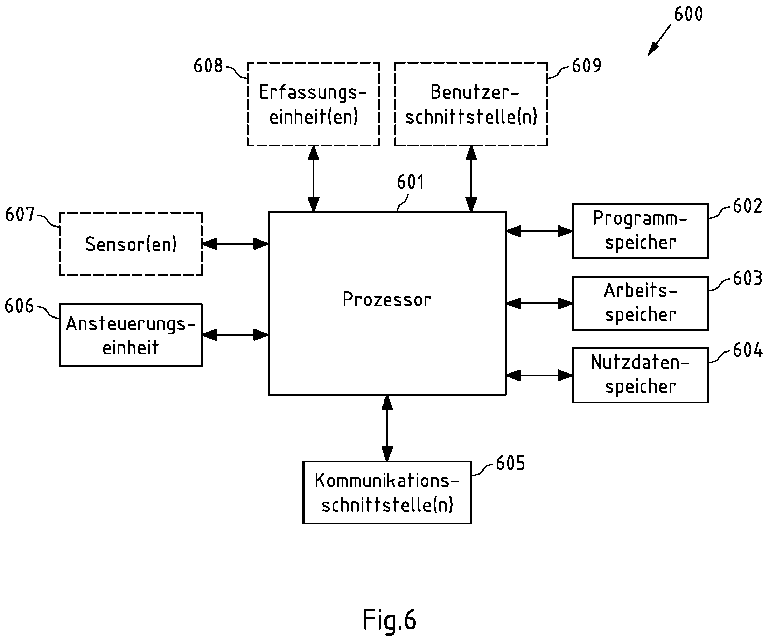

Fig. 6 zeigt eine schematische Darstellung einer beispielhaften Ausführungsform einer erfindungsgemäßen Vorrichtung, beispielsweise einer ersten Vorrichtung 100 oder deren Steuereinheit. Dabei sind für dieses Ausführungsbeispiel optionale Bestandteile gestrichelt dargestellt.

Die Vorrichtung 600 umfasst einen Prozessor 601, einen Programmspeicher 602, einen Arbeitsspeicher 603, einen Nutzdatenspeicher 604, eine oder mehrere Kommunikationsschnittelle(n) 605, eine Ansteuerungseinheit 606, einen oder mehrere optionale Sensoren 607, eine oder mehrere optionale Erfassungseinheit(en) 608 und eine oder mehrere optionale Eingabeeinheit(en) 609. Der Prozessor 601 führt beispielsweise ein Programm gemäß der Erfindung aus, das in dem Programmspeicher 602 gespeichert ist, beispielsweise als Firmware. Arbeitsspeicher 603 dient insbesondere der Speicherung temporärer Daten während des Ablaufs dieses Programms. Der Nutzdatenspeicher 604 dient der Speicherung von Daten, die bei der Abarbeitung des Programms erforderlich sind.

Die Kommunikationsschnittstelle(n) 605 umfasst/umfassen beispielsweise eine Schnittstelle zur drahtlosen Kommunikation mit einem Mobilgerät, beispielsweise mittels optischer Übertragung und/oder mittels Kommunikation, die auf elektrischen, magnetischen oder elektromagnetischen Signalen oder Feldern beruht, insbesondere auf Bluetooth, NFC und/oder RFID (Radio Frequency Identification). In manchen Ausführungsformen ist die Vorrichtung 600 beispielsweise ferner zur direkten Kommunikation mit einem Backend-System eingerichtet, verfügt also beispielsweise über eine Kommunikationsschnittstelle, die einen Zugang zum Internet oder zu einem anderen Netz, an das das Backend-System angeschlossen ist, ermöglicht.

Die Ansteuerungseinheit 606 ermöglicht es beispielsweise, eine Sendung in ein bestimmtes Registerfach aufzunehmen, insbesondere durch Ansteuerung der Motoren und/oder Getriebe. Die Ansteuerungseinheit ermöglicht es aber beispielsweise auch, ein einzelnes Fach 119, 122 der ersten Vorrichtung 100 gezielt zu öffnen oder zu entriegeln, um die Öffnung zu ermöglichen, insbesondere durch Ansteuerung des Schlosses des Fachs 119, 122 oder einer Schlosssteuereinheit des Fachs 119, 122.

Die Sensoren 607 ermöglichen es beispielsweise zu detektieren, ob Sendungen in die Eingabestelle 115 eingelegt wurden und/oder ob Sendungen aus der Ausgabestelle 116 entnommen wurden. Sie ermöglichen beispielsweise auch zu erfassen, ob sich in einem jeweiligen Fach 118, 119, 122 eine jeweilige Sendung oder ein jeweiliges Objekt befindet und/oder ob die Tür eines Fachs 118, 119, 122 geöffnet oder geschlossen ist.

Die Erfassungseinheit(en) 608 ermöglicht/ermöglichen beispielsweise die automatische Erfassung der Eigenschaft oder Information der Sendung, auf der die Prüfung 406 basiert, ob die Sendung in ein Registerfach aufgenommen werden soll. Sie ist einer beispielhaften Ausführungsform ein Scanner, welcher optisch Informationen erfassen kann (alternativ kann beispielsweise RFID-Technik zum Einsatz kommen).

Die Benutzerschnittstelle(n) 609 ist/sind zur Kommunikation mit einem Benutzer eingerichtet. Eine Benutzerschnittstelle kann dabei beispielsweise eine Ausgabeeinheit zum Anzeigen (z.B. über einen Bildschirm oder über fachspezifische Leuchtanzeigen (z.B. zur Darstellung eines jeweiligen Zustands belegt/unbelegt) oder akustischen Ausgeben von Informationen und/oder eine Eingabeeinheit zum Erhalten von Informationen und/oder Daten (z.B. eine Tastatur oder einen berührungsempfindlichen Bildschirm mit Bildschirmtastatur oder ein Spracherkennungsmodul) von den Personen umfassen. Bevorzugt ist jedoch keine Eingabeeinheit/Ausgabeeinheit vorgesehen und der Benutzer kommuniziert lediglich über ein Mobilgerät mit der ersten Vorrichtung 100, um beispielsweise den diesbezüglichen Wartungs- und/oder Reparaturaufwand (z.B. aufgrund von Vandalismus) und/oder die Herstellungskosten zu verringern. Die Benutzerschnittstelle (beispielsweise umfassend die Menüführung) der ersten Vorrichtung 100 ist dann beispielsweise zumindest teilweise oder vollständig auf das Mobilgerät ausgelagert.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Die folgenden beispielhaften Ausführungsformen der Erfindung sollen ebenfalls offenbart gelten:
Ausführungsform 1:
   Verfahren ausgeführt durch eine erste Vorrichtung oder durch eine Komponente davon, wobei die erste Vorrichtung eine Vielzahl von Registerfächern umfasst, das Verfahren umfassend:
   - Erhalten einer Sendung, insbesondere einer Briefsendung;
   - Prüfen, ob die Sendung in ein Registerfach der Vielzahl von Registerfächern aufgenommen werden soll;
   - Aufnehmen der Sendung in ein Registerfach, falls die Prüfung ergeben hat, dass die Sendung in ein Registerfach der Vielzahl von Registerfächern aufgenommen werden soll; und
   - Ablehnen der Sendung, falls die Prüfung ergeben hat, dass die Sendung nicht in ein Registerfach der Vielzahl von Registerfächern aufgenommen werden soll.
Ausführungsform 2:
   Verfahren nach Ausführungsform 1, ferner umfassend:
   - Ausgeben der Sendung an eine Person, die sich gegenüber der ersten Vorrichtung erfolgreich authentisiert hat.
Ausführungsform 3:
   Verfahren nach einer der vorherigen Ausführungsformen, wobei das Prüfen zumindest auf einer Eigenschaft oder Information der Sendung basiert
Ausführungsform 4:
   Verfahren nach Ausführungsform 3, wobei die Eigenschaft der Sendung bei dem Erhalten der Sendung automatisch erfasst wird.
Ausführungsform 5:
   Verfahren nach einer der vorherigen Ausführungsformen, wobei das Prüfen zumindest auf der aktuellen oder prognostizierten Auslastung der ersten Vorrichtung basiert.
Ausführungsform 6:
   Verfahren nach einer der vorherigen Ausführungsformen, wobei das Prüfen ferner ein Prüfen umfasst, ob eine oder mehrere bereits in einem oder mehreren Registerfächern der Registeranlage aufgenommene Sendungen ausgegeben werden sollen.
Ausführungsform 7:
   Verfahren nach einer der vorherigen Ausführungsformen, wobei das Prüfen in Reaktion auf das Erhalten der Sendung oder nach dem Erhalten der Sendung erfolgt.
Ausführungsform 8:
   Verfahren nach einer der vorherigen Ausführungsformen, wobei zumindest ein Registerfach der Vielzahl von Registerfächern eingerichtet ist, mehrere Sendungen gleichzeitig zu lagern, insbesondere mehrere Sendungen, die mit demselben Sendungsempfänger assoziiert sind.
Ausführungsform 9:
   Verfahren nach einer der vorherigen Ausführungsformen, wobei die Vielzahl von Registerfächern Teil einer Registeranlage der ersten Vorrichtung sind.
Ausführungsform 10:
   Verfahren nach Ausführungsform 9, wobei die Registeranlage eingerichtet ist, das Aufnehmen der Sendung in dem Registerfach der Sendung durchzuführen.
Ausführungsform 11:
   Verfahren nach einer der Ausführungsformen 9-10, wobei die Registeranlage eingerichtet ist, beim Ablehnen der Sendung eine oder mehrere weitere bereits in einem oder mehreren Registerfächern der Registeranlage aufgenommenen Sendungen auszugeben.
Ausführungsform 12:
   Verfahren nach einer der Ausführungsformen 9-11, wobei die Vielzahl der Registerfächer in der Registeranlage beweglich, insbesondere um eine Achse drehbar, angeordnet sind.
Ausführungsform 13:
   Verfahren nach einer der Ausführungsformen 9-11, wobei die Vielzahl der Registerfächer in der Registeranlage entlang einer geschlossenen, insbesondere ovalen Trajektorie bewegbar sind.
Ausführungsform 14:
   Verfahren nach einer der vorherigen Ausführungsformen, wobei die Sendung eine Briefsendung ist und wobei die erste Vorrichtung ferner mehrere Fächer umfasst, von denen zumindest einige Fächer zur Aufnahme von Briefsendungen ausgelegt sind.
Ausführungsform 15:
   Verfahren nach Ausführungsform 14, wobei zumindest ein Fach ferner zur Aufnahme von Paketsendungen ausgelegt ist.
Ausführungsform 16:
   Verfahren nach einer der Ausführungsformen 14-15, sofern rückbezogen auf eine der Ausführungsformen 9-13, wobei die Registeranlage in einem Fach der ersten Vorrichtung untergebracht ist.
Ausführungsform 17:
   Verfahren nach Ausführungsform 16, wobei das Fach nur Personen zugänglich ist, die sich gegenüber der ersten Vorrichtung authentisiert haben.
Ausführungsform 18:
   Verfahren nach einer der vorherigen Ausführungsformen, wobei die erste Vorrichtung eingerichtet ist, mehrere Sendungen auf einmal zu erhalten und für jede der mehreren Sendungen sequenziell das Prüfen durchzuführen.
Ausführungsform 19:
   Verfahren nach einer der vorherigen Ausführungsformen, wobei zumindest eines der Registerfächer eingerichtet ist, seine Größe zu verändern.
Ausführungsform 20:
   Verfahren nach einer der vorherigen Ausführungsformen, wobei zumindest eines der Registerfächer eine Lagergröße und eine Eingabegröße hat, wobei für die Eingabe einer Sendung in das zumindest eine Registerfach und/oder die Ausgabe einer Sendung aus dem zumindest einen Registerfach das Registerfach von der Lagergröße auf die Eingabegröße vergrößert wird und nach der Eingabe und/oder Ausgabe wieder auf die Lagergröße verkleinert wird.
Ausführungsform 21:
   Verfahren nach einer der vorherigen Ausführungsform, wobei die Sendung eine Briefsendung ist und wobei die erste Vorrichtung ferner eine Fachanlage mit mehreren Fächern umfasst, von denen zumindest einige Fächer zur Aufnahme von Paketsendungen ausgelegt sind.
Ausführungsform 22:
   Verfahren nach Ausführungsform 21, soweit auf Ausführungsform 2 rückbezogen, wobei die erste Vorrichtung eine Benutzerschnittstelle aufweist, über die sowohl Zugang zu einem oder mehreren der Fächer der Fachanlage erhalten werden kann als auch das Ausgeben der Sendung bewirkt werden kann.
Ausführungsform 23:
   Vorrichtung, umfassend Mittel zur Ausführung und/oder Steuerung des Verfahrens nach einer der vorherigen Ausführungsformen, wobei die Vorrichtung die erste Vorrichtung oder die Komponente davon ist
Ausführungsform 24:
   Vorrichtung nach Ausführungsform 23, sofern rückbezogen auf Ausführungsform 9, ferner umfassend die Registeranlage.
Ausführungsform 25:
   Verwendung einer Vorrichtung nach einer der Ausführungsformen 23-24, um eine Sendung für eine Person zu hinterlegen und der Person zu ermöglichen, Zugriff auf diese Sendung zu erhalten.
Ausführungsform 26:
   Computerprogramm, umfassend Programmanweisungen, die einen Prozessor zur Ausführung und/oder Steuerung zumindest der folgenden Schritte veranlassen, wenn das Computerprogramm auf dem Prozessor läuft:
   - Erhalten einer Sendung, insbesondere einer Briefsendung, an einer ersten Vorrichtung, die eine Vielzahl von Registerfächern umfasst;
   - Prüfen, ob die Sendung in einem Registerfach der Vielzahl von Registerfächern aufgenommen werden soll;
   - Aufnehmen der Sendung in einem Registerfach, falls die Prüfung ergeben hat, dass die Sendung in einem Registerfach der Vielzahl von Registerfächern aufgenommen werden soll; und
   - Ablehnen [z.B. durch Auswurf/Ausgabe oder Mitteilung an den Nutzer, die Sendung wieder zu entnehmen] der Sendung, falls die Prüfung ergeben hat, dass die Sendung nicht in einem Registerfach der Vielzahl von Registerfächern aufgenommen werden soll.

## Patentansprüche

1. Verfahren ausgeführt durch eine erste Vorrichtung oder durch eine Komponente davon, wobei die erste Vorrichtung eine Vielzahl von Registerfächern umfasst, das Verfahren umfassend:
- Erhalten einer Sendung, insbesondere einer Briefsendung;
- Prüfen, ob die Sendung in ein Registerfach der Vielzahl von Registerfächern aufgenommen werden soll;
- Aufnehmen der Sendung in ein Registerfach, falls die Prüfung ergeben hat, dass die Sendung in ein Registerfach der Vielzahl von Registerfächern aufgenommen werden soll; und
- Ablehnen der Sendung, falls die Prüfung ergeben hat, dass die Sendung nicht in ein Registerfach der Vielzahl von Registerfächern aufgenommen werden soll.

2. Verfahren nach Anspruch 1, ferner umfassend:
- Ausgeben der Sendung an eine Person, die sich gegenüber der ersten Vorrichtung erfolgreich authentisiert hat.

3. Verfahren nach einem der vorherigen Ansprüche, wobei das Prüfen zumindest auf einer Eigenschaft oder Information der Sendung, die insbesondere bei dem Erhalten der Sendung automatisch erfasst wird, basiert.

4. Verfahren nach einem der vorherigen Ansprüche, wobei das Prüfen zumindest auf der aktuellen oder prognostizierten Auslastung der ersten Vorrichtung basiert.

5. Verfahren nach einem der vorherigen Ansprüche, wobei das Prüfen ferner ein Prüfen umfasst, ob eine oder mehrere bereits in einem oder mehreren Registerfächern der Registeranlage aufgenommenen Sendungen ausgegeben werden sollen.

6. Verfahren nach einem der vorherigen Ansprüche, wobei das Prüfen in Reaktion auf das Erhalten der Sendung oder nach dem Erhalten der Sendung erfolgt.

7. Verfahren nach einem der vorherigen Ansprüche, wobei zumindest ein Registerfach der Vielzahl von Registerfächern eingerichtet ist, mehrere Sendungen gleichzeitig zu lagern, insbesondere mehrere Sendungen, die mit demselben Sendungsempfänger assoziiert sind.

8. Verfahren nach einem der vorherigen Ansprüche, wobei die Vielzahl von Registerfächern Teil einer Registeranlage der ersten Vorrichtung sind, wobei die Registeranlage insbesondere eingerichtet ist, das Aufnehmen der Sendung in dem Registerfach der Sendung durchzuführen.

9. Verfahren nach Anspruch 8, wobei die Registeranlage eingerichtet ist, beim Ablehnen der Sendung eine oder mehrere weitere bereits in einem oder mehreren Registerfächern der Registeranlage aufgenommenen Sendungen auszugeben.

10. Verfahren nach Anspruch 8, wobei die Vielzahl der Registerfächer in der Registeranlage beweglich, insbesondere um eine Achse drehbar, angeordnet sind, oder die Vielzahl der Registerfächer in der Registeranlage entlang einer geschlossenen, insbesondere ovalen Trajektorie bewegbar sind.

11. Verfahren nach einem der vorherigen Ansprüche, wobei die Sendung eine Briefsendung ist und wobei die erste Vorrichtung ferner mehrere Fächer umfasst, von denen zumindest einige Fächer zur Aufnahme von Briefsendungen ausgelegt sind, wobei insbesondere zumindest ein Fach ferner zur Aufnahme von Paketsendungen ausgelegt ist.

12. Verfahren nach Anspruch 11, sofern rückbezogen auf einen der Ansprüche 8-10, wobei die Registeranlage in einem Fach der ersten Vorrichtung untergebracht ist, wobei das Fach insbesondere nur Personen zugänglich ist, die sich gegenüber der ersten Vorrichtung authentisiert haben.

13. Verfahren nach einem der vorherigen Ansprüche, wobei die erste Vorrichtung eingerichtet ist, mehrere Sendungen auf einmal zu erhalten und für jede der mehreren Sendungen sequenziell das Prüfen durchzuführen.

14. Verfahren nach einem der vorherigen Ansprüche, wobei zumindest eines der Registerfächer eingerichtet ist, seine Größe zu verändern, oder wobei zumindest eines der Registerfächer eine Lagergröße und eine Eingabegröße hat und für die Eingabe einer Sendung in das zumindest eine Registerfach und/oder die Ausgabe einer Sendung aus dem zumindest einen Registerfach das Registerfach von der Lagergröße auf die Eingabegröße vergrößert wird und nach der Eingabe und/oder Ausgabe wieder auf die Lagergröße verkleinert wird.

15. Verfahren nach einem der vorherigen Ansprüche, wobei die Sendung eine Briefsendung ist und wobei die erste Vorrichtung ferner eine Fachanlage mit mehreren Fächern umfasst, von denen zumindest einige Fächer zur Aufnahme von Paketsendungen ausgelegt sind.

16. Verfahren nach Anspruch 15, soweit auf Anspruch 2 rückbezogen, wobei die erste Vorrichtung eine Benutzerschnittstelle aufweist, über sowohl Zugang zu einem oder mehreren der Fächer der Fachanlage erhalten werden kann als auch das Ausgeben der Sendung bewirkt werden kann.

17. Vorrichtung, umfassend Mittel zur Ausführung und/oder Steuerung des Verfahrens nach einem der vorherigen Ansprüche, wobei die Vorrichtung die erste Vorrichtung oder die Komponente davon ist.

18. Verwendung einer Vorrichtung nach Anspruch 17, um eine Sendung für eine Person zu hinterlegen und der Person zu ermöglichen, Zugriff auf diese Sendung zu erhalten.

19. Computerprogramm, umfassend Programmanweisungen, die einen Prozessor zur Ausführung und/oder Steuerung zumindest der folgenden Schritte veranlassen, wenn das Computerprogramm auf dem Prozessor läuft:
- Erhalten einer Sendung, insbesondere einer Briefsendung, an einer ersten Vorrichtung, die eine Vielzahl von Registerfächern umfasst;
- Prüfen, ob die Sendung in einem Registerfach der Vielzahl von Registerfächern aufgenommen werden soll;
- Aufnehmen der Sendung in einem Registerfach, falls die Prüfung ergeben hat, dass die Sendung in einem Registerfach der Vielzahl von Registerfächern aufgenommen werden soll; und
- Ablehnen der Sendung, falls die Prüfung ergeben hat, dass die Sendung nicht in einem Registerfach der Vielzahl von Registerfächern aufgenommen werden soll.
